Europäisches Patentamt

European Patent Office

Office européen des brevets

(11) Numéro de publication: **0 294 355**
**A2**

## (12) DEMANDE DE BREVET EUROPEEN

(21) Numéro de dépôt: **88870007.7**

(22) Date de dépôt: **22.01.88**

(51) Int. Cl.⁴: **B 62 J 7/06**
B 62 J 6/00

(30) Priorité: **05.06.87 BE 8700631**

(43) Date de publication de la demande:
**07.12.88 Bulletin 88/49**

(84) Etats contractants désignés:
**AT BE CH DE ES FR GB GR IT LI LU NL SE**

(71) Demandeur: **Bammens, Michel**
**Molenweg, 136**
**B-3520 Zonhoven (BE)**

(72) Inventeur: **Bammens, Michel**
**Molenweg, 136**
**B-3520 Zonhoven (BE)**

(74) Mandataire: **Callewaert, Jean et al**
**Bureau Gevers S.A. rue de Livourne 7 bte 1**
**B-1050 Bruxelles (BE)**

(54) **Support, tel que porte-bagages et porte-lampe.**

㉟ Support, notamment porte-bagages, porte-lampe, destiné à être monté à l'avant d'une bicyclette, cette dernière comprenant une fourche (1), dans laquelle la roue avant (2) est fixée en rotation, et un frein à main (9) pour cette roue avant, qui est agencé sur la bicyclette, contre le côté avant ou arrière de la couronne (3) de la fourche (1) au moyen d'un boulon de fixation (4), des moyens étant prévus, à son côté arrière, pour permettre d'attacher ce côté arrière du support par ce boulon de fixation (4) d'une manière sensiblement immobile contre la couronne (3) de la fourche (1).

Fig.3.

EP 0 294 355 A2

Bundesdruckerei Berlin

## Description

## "Support, tel que porte-bagages et porte-lampe"

L'invention est relative à un support, tel qu'un porte-bagages, porte-lampe ou analogue, destiné à être monté à l'avant d'une bicyclette, cette dernière comprenant une fourche dans laquelle la roue avant est fixée en rotation, et un frein à main pour cette roue avant, qui est agencé sur la bicyclette, contre le côté avant ou arrière de la couronne de la fourche, au moyen d'un boulon de fixation.

Les porte-bagages de ce type utilisés jusqu'à présent reposent en général sur les extrémités de l'axe de la roue par l'intermédiaire de barres latérales, d'une part, et sont fixés par des moyens de fixation appropriés sur le cadre de la bicyclette, d'autre part.

De tels porte-bagages occupent généralement un espace relativement important et exigent beaucoup de temps aussi bien pour la fixation sur la bicyclette que pour leur démontage. De plus, la roue avant de la bicyclette doit généralement être démontée également.

Il en est de même pour les porte-lampes connus qui sont montés sur l'avant de la bicyclette et qui exigent l'utilisation d'un système de fixation particulier.

L'invention a essentiellement pour but de remédier à ces inconvénients en proposant un support pouvant être agencé facilement et d'une manière démontable sur n'importe quel type de bicyclette à frein à main et ceci sans devoir faire usage de systèmes de fixation particuliers.

A cet effet, le support suivant l'invention est pourvu, à son côté arrière, de moyens pour permettre d'attacher ce côté arrière du support par ce boulon de fixation d'une manière sensiblement immobile contre la couronne de la fourche.

Avantageusement, les moyens précités comprennent des organes d'appui s'étendant de part et d'autre d'une tige centrale, se dressant sur la couronne, ces organes étant destinés, d'une part, à reposer sur la couronne de la fourche et, d'autre part, à s'appliquer contre le côté avant de cette dernière lors du serrage dudit boulon de fixation.

Dans une forme de réalisation particulière de l'invention, le côté arrière du support est délimité par une pièce plate dont les extrémités latérales sont pliées vers l'avant, sensiblement suivant les côtés latéraux du support, cette pièce étant destinée à être appliquée du côté avant de la couronne de la fourche au moyen du boulon de fixation.

Dans une autre forme de réalisation encore, la partie centrale de la pièce plate présente une fente pour le passage du boulon de fixation qui est ouverte vers le bas.

D'autres particularités et avantages de l'invention ressortiront de la description des figures annexées qui se rapportent à une forme de réalisation particulière d'un porte-bagages et d'un porte-lampe suivant l'invention ; cette description est uniquement donnée à titre d'exemple et ne limite pas la portée de la protection revendiquée ; les chiffres de référence utilisés ci-après se rapportent aux figures annexées.

La figure 1 est une vue latérale d'une partie d'une bicyclette, avec brisures partielles, qui est équipée d'un porte-bagages suivant cette forme de réalisation particulière de l'invention.

La figure 2 est une vue en perspective du porte-bagages suivant cette forme de réalisation particulière.

La figure 3 est une représentation, avec brisures partielles, des parties essentielles de l'invention, dans laquelle ces parties ont été décalées suivant l'axe du boulon de fixation.

La figure 4 est une vue en perspective d'une forme de réalisation particulière d'un porte-lampe suivant l'invention.

Dans ces différentes figures, les mêmes chiffres de référence se rapportent aux mêmes éléments ou à des éléments analogues.

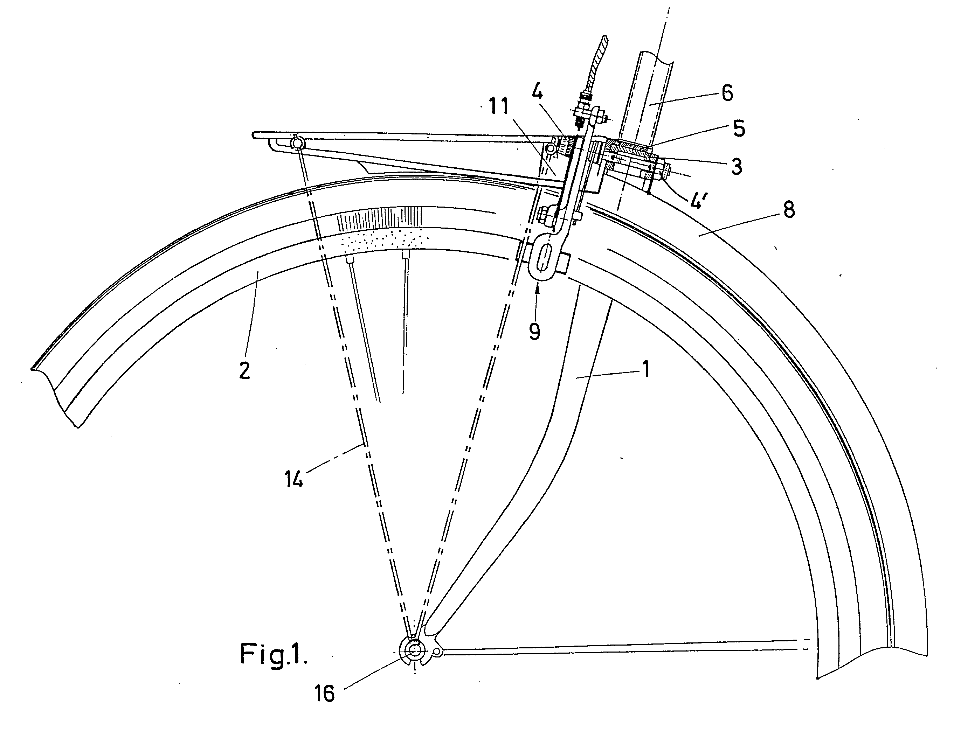

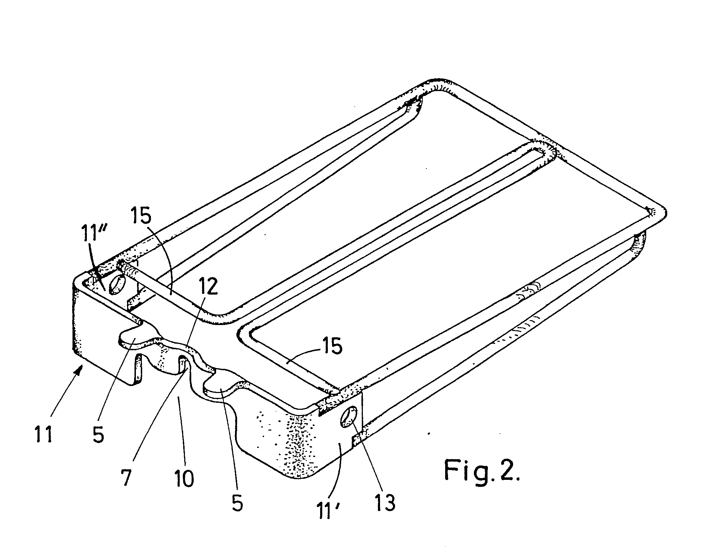

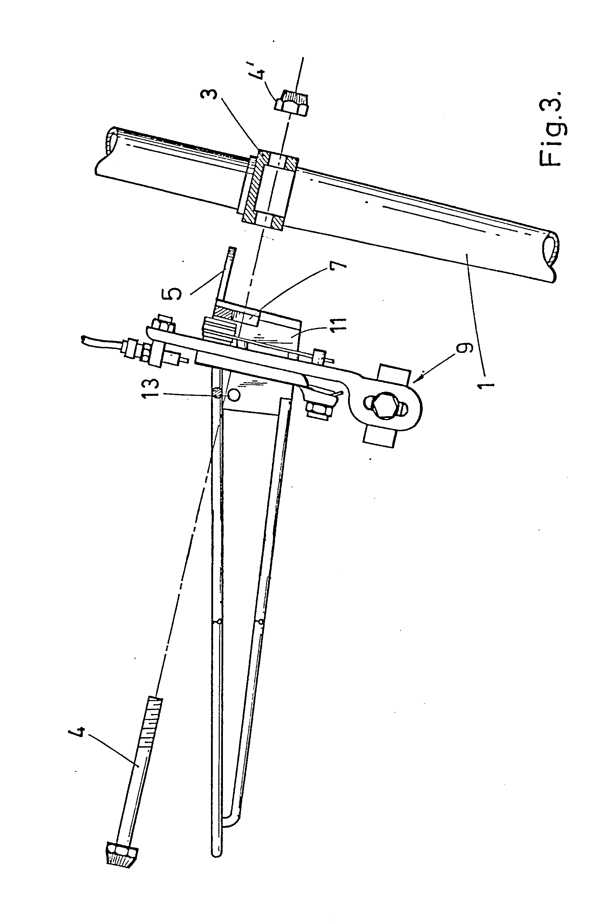

Le porte-bagages, suivant l'invention, dont une forme de réalisation particulière a été montrée aux figures 1 à 3, est destiné à être monté à l'avant d'une bicyclette comprenant une fourche 1, entre les branches de laquelle la roue avant 2 peut être montée en rotation, et un frein à main 9 pour cette dernière. Dans ce cas particulier, le frein à main 9 est fixé contre le côté avant de la couronne 3 de la fourche au moyen d'un boulon de fixation 4 qui s'étend à travers de cette couronne.

Suivant l'invention, le porte-bagages est pourvu à son côté arrière, c'est-à-dire le côté qui est dirigé vers l'arrière lorsque celui-ci est monté sur la bicyclette, de moyens pour permettre d'attacher, de manière immobile, cette partie arrière par le même boulon de fixation que celui du frein à main 9, sans aucun organe de fixation supplémentaire.

Ainsi, le boulon de fixation 4 coopère avec le porte-bagages, le frein à main et la couronne 3 de la fourche 1.

Afin de limiter les sollicitations du boulon de fixation 4 à un strict minimum et ceci sensiblement indépendamment de la charge posée sur le porte-bagages, on veille surtout à ce que les forces de cisaillement et les moments de flexion soient transmis autant que possible directement sur la couronne 3 de la fourche 1, de façon que le boulon 4 ne soit sensiblement soumis qu'à une force de traction axiale.

Ainsi, dans cette forme de réalisation spécifique du porte-bagages suivant l'invention, les moyens précités présentent des organes d'appui qui sont destinés, d'une part, à reposer au-dessus de la couronne 3 de la fourche 1 et, d'autre part, à s'appliquer contre la face avant de cette dernière lors du serrage du boulon de fixation 4.

Ces organes de fixation comprennent plus particulièrement une pièce dressée 11 qui délimite la partie arrière du porte-bagages et qui est destinée à être serrée par son côté plat au moyen du boulon 4 contre l'avant de la couronne 3 de la fourche 1. Les extrémités latérales 11' et 11" de cette pièce sont pliées vers l'avant suivant les côtés latéraux du porte-bagages et forment donc en même temps un renforcement pour ce dernier. Cette pièce plate 11 permet par conséquent d'intercepter les moments de flexion qui agissent sur le porte-bagages.

Les organes d'appui comprennent en outre, sur le bord supérieur de la pièce 11, des lèvres 5 qui s'étendent vers l'arrière et qui reposent librement sur la couronne 3. Ces lèvres sont donc destinées à intercepter les forces verticales qui agissent sur le porte-bagages. Ces lèvres se trouvent de part et d'autre de la tige centrale 6 qui se dresse sur la fourche et qui est montée en rotation dans une pièce tubulaire correspondante du cadre de la bicyclette.

Grâce à la présence de ces appuis supérieurs et latéraux et l'épaisseur relativement réduite de la pièce 11, on peut garder le boulon de fixation classique 4 qui était utilisé pour le frein à main de la roue avant.

La pièce 11 présente encore, dans sa zone centrale, une fente transversale 7 qui est ouverte vers le bas. Le but en est de pouvoir glisser le porte-bagages sur le boulon de fixation 4 sans devoir démonter entièrement le frein à main 9, ce qui représente un gain de temps relativement important lors du montage.

De plus, la partie 11 présente, dans le bord inférieur de sa zone centrale, un évidement 10 qui laisse de l'espace pour un garde-boue 8 de la roue 2.

D'une manière avantageuse, la pièce plate 11 est quelque peu pliée vers l'intérieur dans sa zone centrale, de sorte qu'un effet de ressort est obtenu lors du serrage du boulon 4 permettant, par conséquent, de fixer cette pièce rigidement contre la face avant de la couronne 3.

Enfin, des barres démontables 14 peuvent être prévues latéralement par rapport à la partie du porte-bagages se trouvant au-dessus de la roue, ces barres s'étendant à partir de cette dernière jusqu'à l'axe 16 de la roue ou de l'extrémité libre des branches de la fourche 1. Il est ainsi possible de fixer contre ces barres 11 des sacoches ou analogue. Etant donné que ces bares ne servent pas comme appui pour le porte-bagages, elles peuvent être très minces et être réalisées en un matériau très léger. Elles ne s'appuient en effet pas sur l'axe 16 de la roue avant, de sorte qu'il n'existe pas non plus de risque de flambage.

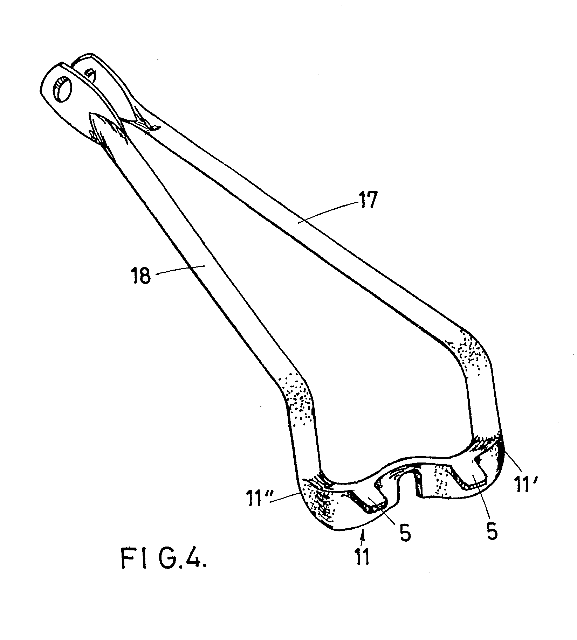

Dans la figure 4, on représente un support qui est constitué d'un porte-lampe. Comme pour le porte-bagages, ce porte-lampe comprend également une pièce plate 11 munie, à son bord supérieur, de deux lèvres 5 qui reposent librement sur la couronne. Les extrémités latérales 11' et 11" de la pièce plate 11 sont pliées vers l'avant et sont prolongées par deux bras 17 et 18 qui s'étendent obliquement vers le haut en se rapprochant l'un vers l'ature.

Le montage du support suivant l'invention sur la bicyclette a lieu comme suit.

Si, comme c'est le cas pour la bicyclette représentée à la figure 1, le frein à main avant se trouve devant la couronne de la fourche, on desserre tout d'abord le boulon de fixation 4 de ce frein et on déplace ce dernier quelque peu vers l'avant par rapport à la fourche. Ensuite, on met le porte-bagages en place pour que la pièce plate 11 s'appuie directement contre le côté avant de la fourche.

Après, le boulon est glissé à partir du côté arrière de la fourche à travers cette dernière et la fente de la pièce plate du porte-bagages et le frein est engagé entre la tige transversale 15 et cette pièce plate 11 du porte-bagages, sur l'extrémité libre du boulon. Enfin, on visse l'écrou 4' du boulon à nouveau sur l'extrémité libre de ce dernier.

Une autre possiblité consiste à glisser le boulon du côté avant à travers le frein 9, la pièce plate 11 et la fourche et ensuite de visser l'écrou 4' sur l'extrémité libre du boulon qui dépasse du côté arrière de la fourche. C'est cette autre possibilité qui a été représentée aux figures.

En aucun cas il n'est nécessaire de défaire entièrement le frein à main. Il suffit de lâcher quelque peu le câble du frein à main pour obtenir un certain espace entre la fourche et le frein et pour permettre ainsi de glisser la pièce plate entre les deux et de fixer après, à nouveau le tout par le boulon 4.

L'invention n'est nullement limitée à la forme de réalisation décrite ci-dessus et, dans le cadre de la protection revendiquée, plusieurs variantes peuvent être envisagées, entre autres en ce qui concerne la forme du porte-bagages.

De plus, on pourrait, par exemple, fixer d'une manière amovible une bride de montage pour la lampe du côté avant du porte-bagages.

Enfin, on pourrait également faire usage du support suivant l'invention pour la fixation d'indicateurs de direction ou d'accessoires décoratifs, tels que des drapeaux ou analogue.


**Revendications**


1. Support, notamment porte-bagages, porte-lampe, destiné à être monté à l'avant d'une bicyclette, cette dernière comprenant une fourche (1), dans laquelle la roue avant (2) est fixée en rotation, et un frein à main (9) pour cette roue avant, qui est agencé sur la bicyclette, contre le côté avant ou arrière de la couronne (3) de la fourche (1) au moyen d'un boulon de fixation (4), caractérisé en ce qu'il est pourvu, à son côté arrière, de moyens pour permettre d'attacher ce côté arrière du support par ce boulon de fixation (4) d'une manière sensiblement immobile contre la couronne (3) de la fourche (1).

2. Support suivant la revendication 1, caractérisé en ce que les moyens précités comprennent des organes d'appui s'étendant de part et d'autre d'une tige centrale (6) se dressant sur la couronne (3), ces organes étent destinés, d'une part, à reposer sur la couronne (3) de la fourche et, d'autre part, à s'appliquer contre le côté avant de cette dernière lors du serrage dudit boulon de fixation (4).

3. Support suivant l'une ou l'autre des revendications 1 ou 2, caractéisé en ce que le côté arrière de celui-ci est délimité par une pièce plate (11), dont les extrémités latérales sont pliées vers l'avant, sensiblement suivant les côtés latéraux du support, cette pièce étant destinée à être appliquée du côté avant de la couronne (3) de la fourche (1) au moyen du boulon de fixation (4).

4. Support suivant la revendication 3, caractérisé en ce que les organes d'appui précités comprennent des lèvres (5) s'étendant vers l'arrière sur la pièce plate (11), de part et d'autre de la tige centrale (6) de la fourche (1) et se reposant librement sur la couronne (3) de cette dernière.

5. Support suivant l'une ou l'autre des revendications 3 et 4, caractérisé en ce que la zone centrale de la pièce plate (11) présente une fente (7) qui est ouverte vers le bas pour le passage du boulon de fixation (4).

6. Support suivant l'une quelconque des revendications 3 à 5, caractérisé en ce que le bord inférieur de la zone centrale de la pièce plate (11) présente un évidement (10) dans lequel un garde- boue (8) de la roue avant (2) peut, au moins partiellement, venir se loger lors de la fixation du support sur la bicyclette.

7. Support suivant l'une ou l'autre des revendications 5 ou 6, caractérisé en ce que la pièce plate (11) est pliée quelque peu vers le côté intérieur du support dans la zone de la fente (7), de manière à obtenir un effet de ressort lors du serrage du boulon de fixation (4).

8. Support suivant l'une quelconque des revendications 1 à 7, caractérisé en ce qu'il comprend au moins deux barres (14) montées de manière amovible, qui s'étendent à partir de la partie du support située au-dessus de la roue avant jusqu'à l'axe de la roue ou l'extrémité libre de la fourche, des charges fixées sur le support pouvant se reposer latéralement contre ces barres.

9. Support suivant l'une quelconque des revendications 1 à 8, caractérisé en ce qu'il est formé par un porte-bagages.

10. Support suivant l'une quelconque des revendications 1 à 7, caractérisé en ce qu'il est constitué d'un porte-lampe, dont le côté arrière est délimité par une pièce plate (11), les extrémités latérales de cette pièce étant pliées vers l'avant et étant prolongées par deux bras (17) et (18) entre lesquels peut être fixée une lampe, ces bras s'étendant obliquement vers le haut en se rapprochant l'un vers l'autre.

0294355

Fig.1.

0294355

Fig.2.

Fig.3.

0294355

0294355

FIG.4.